# FASCICULE DE BREVET EUROPEEN

(11) **EP 3 235 254 B1**
(45) Date de publication et mention de la délivrance du brevet: **15.09.2021**
(21) Numéro de dépôt: 15820475.0
(22) Date de dépôt: 17.12.2015
(51) Int. Cl.: H04N 21/433, H04N 21/436, H04N 21/462, H04N 21/458, H04N 21/45

(54) **PROCÉDÉ D'ANNONCE DE SERVICES DANS UN RÉSEAU DE COMMUNICATION**
VERFAHREN ZUR DIENSTANKÜNDIGUNG IN EINEM KOMMUNIKATIONSNETZ
METHOD OF ANNOUNCING SERVICES IN A COMMUNICATION NETWORK

(30) Priorité: 19.12.2014 FR 1462988
(43) Date de publication de la demande: 25.10.2017
(73) Titulaire: Sagemcom Broadband SAS, 92500 Rueil-Malmaison (FR)
(72) Inventeur: VIVIEN, Nicolas, 92500 Rueil Malmaison (FR)
(74) Mandataire: Cabinet Le Guen Maillet
(86) Numéro de dépôt international: PCT/EP2015/080249
(87) Numéro de publication internationale: WO 2016/097161

(56) Documents cités:
- EP-A1- 2 237 528
- EP-A2- 1 662 711
- US-A1- 2004 139 173
- US-A1- 2004 193 609
- US-A1- 2006 031 887
- US-A1- 2007 168 051

## Description

La présente invention concerne la mise à disposition de services, notamment vis-à-vis de contenus audio et/ou vidéo, dans un réseau de communication.

Des équipements, par exemple audiovisuel comme des dispositifs STB (« Set-Top Box » en anglais, généralement appelé « boîtier décodeur » en français) ou des disques dur HDD (« Hard Disk Drive » en anglais), peuvent être interconnectés par un réseau de communication, *e.g.* domestique. Interconnecter de tels équipements par un réseau de communication permet notamment de partager les ressources matérielles desdits équipements et donne de la flexibilité dans l'utilisation desdits équipements.

Il est connu des solutions pour créer une réserve (« pool » en anglais) de ressources matérielles qui peut être présentée à un utilisateur de manière à pouvoir mettre en œuvre des services, au niveau system, en tirant bénéfice du réseau de communication. Un exemple est décrit dans le document US 2007/168051.

D'un point de vue utilisateur, on ne veut pas avoir à gérer directement un syntoniseur (aussi communément appelé « tuner » d'après la terminologie anglo-saxonne), un disque dur HDD ou autre ressource matérielle. On veut uniquement visualiser un contenu, effectuer un enregistrement,... c'est-à-dire faire effectuer une action ou une série d'actions qui soit cohérente au niveau système et qui fournisse par de simples commandes sans programmation ou configuration complexe un résultat utilisateur. Le système de communication constitué de l'ensemble de ces équipements doit ainsi offrir des services le permettant.

Il est souhaitable de pallier ces inconvénients de l'état de la technique. Il est ainsi souhaitable dans un tel contexte de partager des ressources matérielles tout en masquant la complexité de leur configuration et de leur gestion. Il est aussi souhaitable dans un tel contexte de permettre d'offrir à un ou plusieurs utilisateurs des services cohérents au niveau système qui masquent la complexité de la configuration et de la gestion des ressources matérielles, tout en proposant une solution évolutive quand de nouveaux types de ressources matérielles apparaissent.

L'invention concerne un procédé mis en œuvre par un dispositif de communication d'un système de communication, ledit dispositif de communication est connecté via un réseau de communication à d'autres dispositifs de communication dudit système de communication. Le procédé est tel que le dispositif de communication effectue, sur détection de changement de disponibilité d'au moins une de ses ressources matérielles, une phase d'annonce comportant les étapes suivantes : obtenir une liste de services locaux possibles correspondant à des actions que ledit dispositif de communication est apte à implémenter en s'appuyant sur ses ressources matérielles ; obtenir une liste de ressources matérielles dudit dispositif de communication qui sont nécessaires pour offrir lesdits services locaux ; obtenir une liste de services locaux disponibles parmi les services locaux possibles, d'après les ressources matérielles nécessaires pour offrir lesdits services locaux et d'après la disponibilité effective de ses ressources matérielles ; et annoncer, via le réseau de communication, la liste de services locaux disponibles obtenue, afin de permettre à au moins un dispositif gestionnaire de présenter des services globalement disponibles au sein du système de communication grâce à des listes de services locaux disponibles annoncées par les dispositifs de communication dudit système de communication. Ainsi, la complexité de la configuration et de la gestion des ressources matérielles dudit dispositif de communication sont maquées par le fait que l'annonce est faite sur les services locaux disponibles. Cela permet d'avoir une solution évolutive quand de nouveaux types de ressources matérielles apparaissent, grâce à un tel masquage. En effectuant les annonces sur changement de disponibilité de ses ressource matérielles, le dispositif de communication assure qu'il est présenté des informations effectives concernant les services.

Selon un mode de réalisation particulier, dans la phase d'annonce, le dispositif de communication considéré indique la liste de services locaux disponibles parmi la liste des services locaux possibles.

Selon un mode de réalisation particulier, la phase d'annonce est en outre effectuée sur réception d'une requête d'un dit dispositif gestionnaire.

Selon un mode de réalisation particulier, ladite requête est associée à une information représentative d'un profil utilisateur, et ledit dispositif de communication raffine la liste de services locaux disponibles en écartant chaque service local incompatible avec ledit profil utilisateur.

Selon un mode de réalisation particulier, le dispositif de communication prend en compte une planification de réservations de services locaux dudit dispositif de communication, de telle sorte que, lorsque la planification montre que des ressources matérielles doivent être occupées dans une période de temps qui débute dans un délai inférieur à un seuil prédéfini, ledit dispositif de communication considère que lesdites ressources matérielles ne sont pas disponibles.

Selon un mode de réalisation particulier, la phase d'annonce comporte les étapes suivantes : obtenir une liste de contenus audio et/ou vidéo contenant un identifiant de chaque contenu audio et/ou vidéo que ledit dispositif de communication est apte à recevoir, lorsque ledit dispositif de communication est un dispositif consommateur de contenus audio et/ou vidéo, et un identifiant de chaque contenu audio et/ou vidéo que ledit dispositif de communication est apte à fournir, lorsque ledit dispositif de communication est un dispositif source de contenus audio et/ou vidéo ; obtenir une liste des services locaux possibles vis-à-vis de chaque contenu audio et/ou vidéo ; et annoncer la liste des services locaux, vis-à-vis de chaque contenu audio et/ou vidéo, qui sont disponibles.

Selon un mode de réalisation particulier, chaque dispositif de communication dudit système de communication effectue la phase d'annonce sur détection de changement de disponibilité d'au moins une de ses ressources matérielles, et en ce que chaque dispositif gestionnaire détermine des services globalement disponibles au sein du système de communication à partir des listes de services locaux disponibles tels qu'annoncés par les dispositifs de communication dudit système de communication.

Selon un mode de réalisation particulier, chaque dispositif gestionnaire détermine chaque service globalement disponible au sein du système de communication, en sélectionnant un service local disponible ou en combinant des services locaux disponibles, selon des règles prédéfinies.

Selon un mode de réalisation particulier, chaque dispositif gestionnaire raffine la liste de services globalement disponibles au sein du système de communication, en écartant chaque service globalement disponible au sein du système de communication qui est incompatible avec un profil utilisateur.

L'invention concerne également un dispositif de communication destiné à être utilisé dans un système de communication, ledit dispositif de communication étant destiné à être connecté via un réseau de communication à d'autres dispositifs de communication dudit système de communication. Le dispositif de communication est tel qu'il comporte des moyens pour effectuer une phase d'annonce, sur détection de changement de disponibilité d'au moins une de ses ressources matérielles, en implémentant : des moyens pour obtenir une liste de services locaux possibles correspondant à des actions que ledit dispositif de communication est apte à implémenter en s'appuyant sur ses ressources matérielles ; des moyens pour obtenir une liste de ressources matérielles dudit dispositif de communication qui sont nécessaires pour offrir lesdits services locaux ; des moyens pour obtenir une liste de services locaux disponibles parmi les services locaux possibles, d'après les ressources matérielles nécessaires pour offrir lesdits services locaux et d'après la disponibilité effective de ses ressources matérielles ; et des moyens pour annoncer, via le réseau de communication, la liste de services locaux disponibles obtenue, afin de permettre à au moins un dispositif gestionnaire de présenter des services globalement disponibles au sein du système de communication grâce à des listes de services locaux disponibles annoncées par les dispositifs de communication dudit système de communication.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus selon l'une quelconque de ses variantes, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel la présente invention peut être mise en œuvre ;
- la Fig. 2A illustre schématiquement un exemple d'architecture matérielle d'un dispositif qui est destinataire de contenus audio et/ou vidéo et avec lequel un utilisateur interagit avec le système de communication ;
- la Fig. 2B illustre schématiquement un exemple d'architecture matérielle d'un premier dispositif source de contenus audio et/ou vidéo du système de communication ;
- la Fig. 2C illustre schématiquement un exemple d'architecture matérielle d'un second dispositif source de contenus audio et/ou vidéo du système de communication ;
- la Fig. 2D illustre schématiquement un exemple d'architecture matérielle d'un troisième dispositif source et destinataire de contenus audio et/ou vidéo du système de communication ;
- la Fig. 3 illustre schématiquement un algorithme d'annonce de services localement disponibles sur un dispositif du système de communication ;
- la Fig. 4 illustre schématiquement un algorithme de collecte d'informations relatives à des services localement disponibles sur des dispositifs du système de communication ;
- la Fig. 5 illustre schématiquement un algorithme de suivi de services localement disponibles sur les dispositifs du système de communication ; et
- la Fig. 6 illustre schématiquement un algorithme de mise à disposition de services globalement disponibles au sein du système de communication.

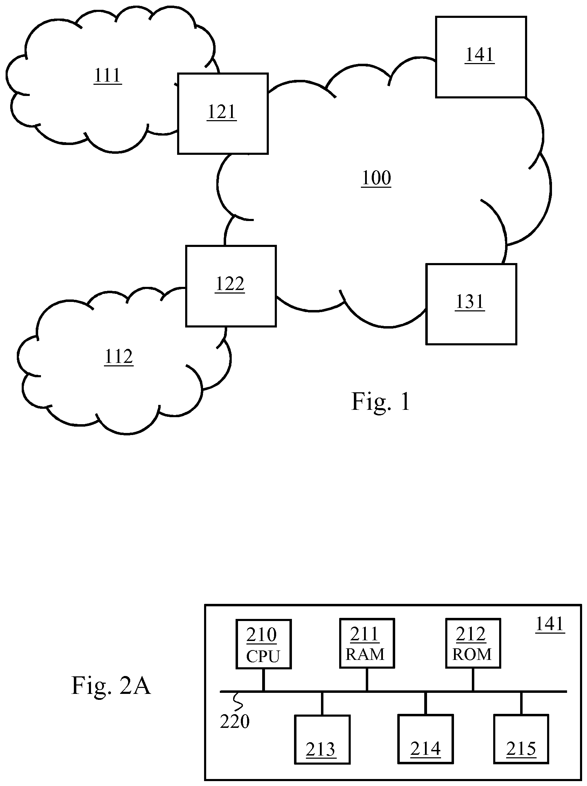

La Fig. 1 illustre schématiquement un système de communication dans lequel la présente invention peut être mise en œuvre. Le système de communication de la Fig. 1 comporte des dispositifs de communication interconnectés par un réseau de communication 100.

Le système de communication de la Fig. 1 comporte préférentiellement au moins un dispositif source de contenus audio et/ou vidéo et au moins un dispositif consommateur de contenus audio et/ou vidéo. Des dispositifs de communication qui sont à la fois sources de tels contenus et consommateurs de tels contenus peuvent aussi faire partie dudit système de communication et être connectés au réseau de communication 100.

De manière illustrative, le système de communication de la Fig. 1 comporte un premier dispositif STB 121 et un second dispositif STB 122.

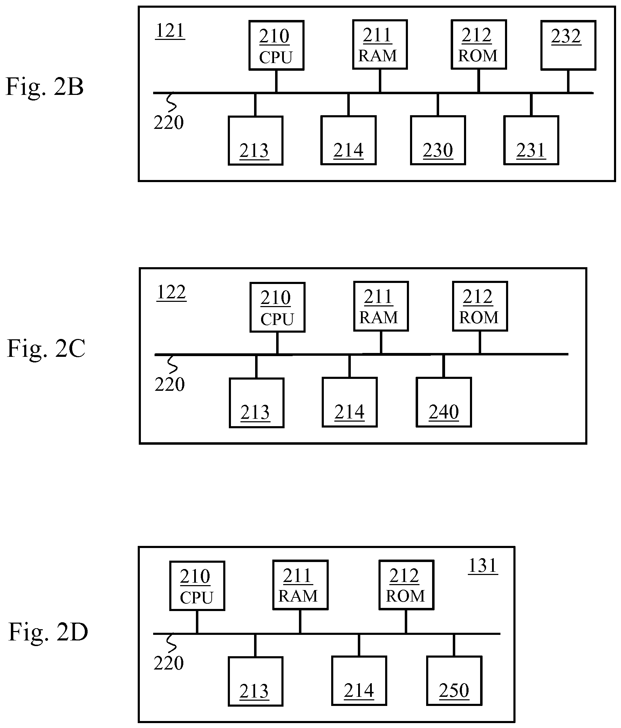

Le premier dispositif STB 121 est apte à recevoir, via un réseau de communication 111, des contenus audio et/ou vidéo sous forme de flux de données diffusés en continu (« live streaming » en anglais), comme par exemple des chaînes télévisées. Le premier dispositif STB 121 est apte à recevoir, via le réseau de communication 111, des flux de données correspondant à des contenus audio et/ou vidéo à la demande (« On-Demand » en anglais). Pour ce faire, le premier dispositif STB 121 comporte un ou plusieurs syntoniseurs. Par la suite, on considère à titre illustratif que le premier dispositif STB 121 comporte deux syntoniseurs. Les flux de données sont par exemple selon un format défini par le groupe MPEG (« Moving Picture Experts Group » en anglais), *e.g.* le format MPEG-2. De tels syntoniseurs peuvent en outre être utilisés pour recevoir des mises à jour de microprogramme (« firmware » en anglais). Le réseau de communication 111 est par exemple l'Internet et le dispositif STB 121 joue le rôle de passerelle Internet pour le compte des dispositifs de communication connectés au réseau de communication 100. Le rôle de passerelle Internet peut en variante être implémenté par un dispositif distinct auquel le premier dispositif STB 121 est connecté, via le réseau de communication 100 ou via un lien de communication dédié. Le réseau de communication 100 est alors un réseau local LAN (« Local Area Network » en anglais), par exemple conforme à la famille de standards IEEE 802.3 ou à la famille de standards IEEE 802.11. Le premier dispositif STB 121 est aussi apte à enregistrer de tels contenus audio et/ou vidéo. Le premier dispositif STB 121 est aussi apte à fournir, à un ou plusieurs dispositifs consommateurs connectés au réseau de communication 100, de tels contenus audio et/ou vidéo. Le premier dispositif STB 121 est ainsi considéré ici comme un dispositif à la fois source de contenus audio et/ou vidéo, et consommateur de contenus audio et/ou vidéo (puisque le premier dispositif STB 121 est capable d'enregistrer des contenus audio et/ou vidéo). Un exemple d'architecture matérielle du premier dispositif STB 121 est détaillé ci-après en relation avec la Fig. 2B.

Le second dispositif STB 122 est apte à recevoir, via un réseau de communication 112, des contenus audio et/ou vidéo sous forme de flux de données diffusés en continu (« live streaming » en anglais), comme par exemple des chaînes télévisées. Pour ce faire, le second dispositif STB 122 comporte un ou plusieurs syntoniseurs. Par la suite, on considère à titre illustratif que le second dispositif STB 122 comporte un seul syntoniseur. Les flux de données sont par exemple selon un format défini par le groupe MPEG, *e.g.* le format MPEG-2. De tels syntoniseurs peuvent en outre être utilisés pour recevoir des mises à jour de microprogramme. Le réseau de communication 112 est par exemple un réseau de diffusion de télévision par satellite ou un réseau de diffusion de télévision par câble. Le second dispositif STB 122 est aussi apte à fournir, à un ou plusieurs dispositifs consommateurs connectés au réseau de communication 100, de tels contenus audio et/ou vidéo. Le second dispositif STB 122 est ainsi considéré ici comme un dispositif source de contenus audio et/ou vidéo. Un exemple d'architecture matérielle du second dispositif STB 122 est détaillé ci-après en relation avec la Fig. 2C.

Toujours de manière illustrative, le système de communication de la Fig. 1 comporte en outre un dispositif de stockage réseau NAS (« Network Attached Storage » en anglais) 131. Le dispositif de stockage réseau NAS 131 est apte à enregistrer des contenus audio et/ou vidéo fournis par l'intermédiaire du réseau de communication 100, par exemple par le premier dispositif STB 121 ou le second dispositif STB 122. Le dispositif de stockage réseau NAS 131 est aussi apte à fournir, à un ou plusieurs dispositifs consommateurs connectés au réseau de communication 100, de tels contenus audio et/ou vidéo enregistrés. Le dispositif de stockage réseau NAS 131 est alors considéré ici comme un dispositif à la fois source et consommateur de contenus audio et/ou vidéo. Un exemple d'architecture matérielle du dispositif de stockage réseau NAS 131 est détaillé ci-après en relation avec la Fig. 2D.

Toujours de manière illustrative, le système de communication de la Fig. 1 comporte en outre un dispositif de présentation de contenu 141 via lequel un utilisateur interagit avec le système de communication, et via lequel l'utilisateur joue des contenus audio et/ou vidéo. Le dispositif de présentation de contenu 141 est alors considéré ici comme un dispositif consommateur de contenus audio et/ou vidéo. Un exemple d'architecture matérielle du dispositif de présentation de contenu 141 est détaillé ci-après en relation avec la Fig. 2A. Il est aussi possible que les fonctionnalités d'interaction avec l'utilisateur (et donc de gestion de services globalement disponibles au sein du système de communication) et de présentation de contenu soient implémentées sur des dispositifs de communication du réseau de communication 100 qui sont distincts.

Il est aussi possible que le système de communication comporte une pluralité de tels dispositif de présentation de contenu, qui présentent des interfaces homme-machine respectives permettant d'interagir avec des utilisateurs et notamment qui permettent auxdits utilisateurs de saisir des données d'identification personnelles *(e.g.* identifiant d'utilisateur et mot de passe) afin de connaître le profil de l'utilisateur interagissant avec tel ou tel dispositif de présentation de contenu. Comme détaillé par la suite, cet aspect permet de présenter à un utilisateur des services globalement disponibles au sein du système de communication qui soient en adéquation avec le profil dudit utilisateur.

Chaque dispositif de communication du réseau de communication 100 comporte ainsi un ensemble de ressources matérielles permettant d'offrir des services vis-à-vis des contenus audio et/ou vidéo, ainsi qu'éventuellement des services complémentaires de gestion *(e.g.* mise à jour de microprogramme, paramétrage dudit dispositif de communication) dudit dispositif de communication. De telles ressources matérielles sont par exemple un ou plusieurs syntoniseurs, un ou plusieurs espaces de stockage de données, une ou plusieurs interfaces de communication *(e.g.* port USB (« Universal Serial Bus » en anglais)), une webcam intégrée, un ou plusieurs composants dédiés à un traitement particulier *(e.g.* transcodage) ou à un action de gestion particulière dudit dispositif de communication *(e.g.* mise à jour de microprogramme, paramétrage dudit dispositif de communication),... Certains dispositifs de communication du réseau de communication 100 peuvent ne proposer que des services de gestion *(e.g.* paramétrage) dudit dispositif de communication.

De tels services sont dits *locaux* lorsqu'ils correspondent à des actions, notamment vis-à-vis d'un contenu audio et/ou vidéo, qu'un dispositif de communication considéré est apte à implémenter par lui-même, ou qu'un ensemble de dispositifs de communication considéré comme un tout est apte à implémenter par lui-même, *i.e.* en s'appuyant sur ses propres ressources matérielles. De tels services sont par exemple des services de traitement de contenus audio et/ou vidéo, de mise à disposition pour présentation de contenus audio et/ou vidéo, d'enregistrement de contenus audio et/ou vidéo, de configuration dudit dispositif de communication, de mise à jour de microprogramme dudit dispositif de communication, d'accès à des jeux en ligne, d'accès à des sites web,...

Ainsi, le premier dispositif STB 121 est apte à fournir un service local d'enregistrement en interne d'un contenu audio et/ou vidéo que ledit premier dispositif STB 121 reçoit du réseau de communication 111. Le premier dispositif STB 121 est aussi apte à fournir un service local de fourniture, à un ou plusieurs dispositifs consommateurs via le réseau de communication 100, d'un contenu audio et/ou vidéo enregistré en interne ou d'un contenu audio et/ou vidéo que ledit premier dispositif STB 121 reçoit du réseau de communication 111. Le premier dispositif STB 121 peut être apte à fournir d'autres services locaux, notamment indépendamment de tout contenu audio et/ou vidéo.

De même, le second dispositif STB 122 est apte à fournir un service local de fourniture, à un ou plusieurs dispositifs consommateurs via le réseau de communication 100, d'un contenu audio et/ou vidéo que ledit second dispositif STB 122 reçoit du réseau de communication 112. Le second dispositif STB 122 peut être apte à fournir d'autres services locaux, notamment indépendamment de tout contenu audio et/ou vidéo.

Le dispositif de stockage réseau NAS 131 est alors apte à fournir un service local d'enregistrement en interne d'un contenu audio et/ou vidéo que le dispositif de stockage réseau NAS 131 reçoit d'un dispositif source via le réseau de communication 100. Le dispositif de stockage réseau NAS 131 est aussi apte à fournir un service local de fourniture, à un ou plusieurs dispositifs consommateurs via le réseau de communication 100, d'un contenu audio et/ou vidéo enregistré en interne. Le dispositif de stockage réseau NAS 131 peut être apte à fournir d'autres services locaux, notamment indépendamment de tout contenu audio et/ou vidéo.

Enfin, le dispositif de présentation de contenu 141 est apte à fournir un service local de présentation d'un contenu audio et/ou vidéo que le dispositif de présentation de contenu 141 reçoit d'un dispositif source via le réseau de communication 100. Le dispositif de présentation de contenu 141 peut être apte à fournir d'autres services locaux, notamment indépendamment de tout contenu audio et/ou vidéo.

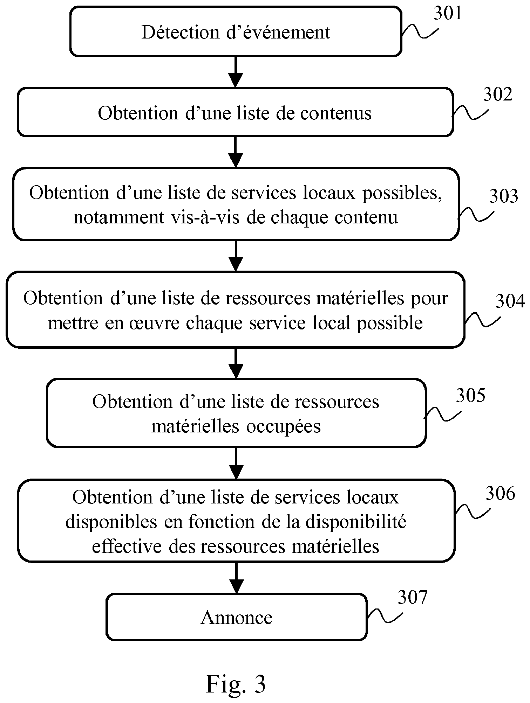

Chaque dispositif de communication du système de communication est configuré pour annoncer, à au moins un dispositif gestionnaire de services globalement disponibles au sein du système de communication, les services locaux que ledit dispositif de communication offre et qui sont disponibles au vu d'une disponibilité effective des ressources matérielles dudit dispositif de communication. L'annonce des services locaux disponibles est donc dynamiquement adaptée en fonction de la disponibilité effective des ressources matérielles du dispositif de communication offrant lesdits services locaux. Cet aspect est détaillé ci-après en relation avec la Fig. 3. L'annonce des services locaux disponibles peut en outre être dynamiquement adaptée en fonction du profil d'un utilisateur auquel des services globalement disponibles au sein du système de communication (définis en fonction des services locaux disponibles au sein du système de communication) sont présentés.

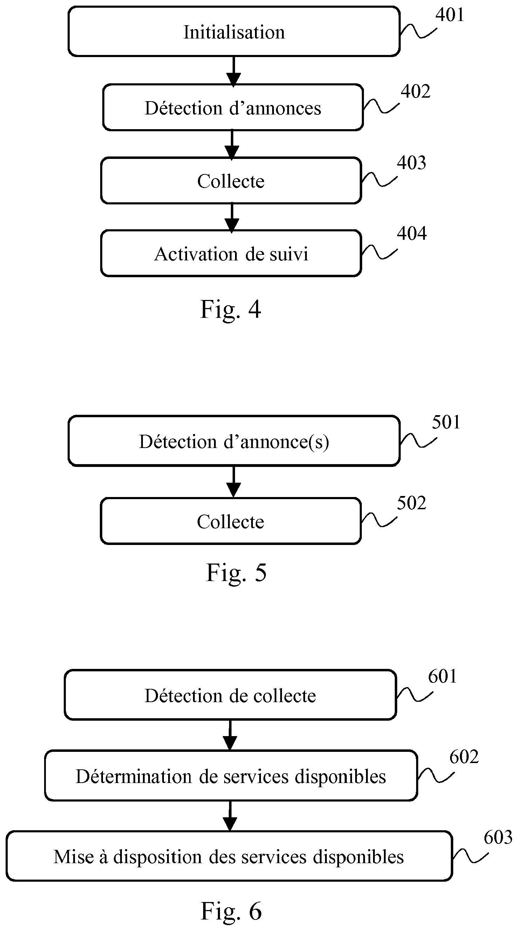

En recevant les annonces faites par les dispositifs de communication connectés au réseau de communication 100, chaque dit dispositif gestionnaire est capable de déterminer une liste de services globalement disponibles au sein du système de communication. Ledit dispositif gestionnaire n'a pas à prendre en compte les ressources matérielles effectivement à disposition auprès de chacun des dispositifs de communication connectés au réseau de communication 100, cet aspect étant masqué par lesdits dispositifs de communication qui annoncent en temps-réel les services locaux que lesdits dispositifs de communication peuvent effectivement offrir respectivement. Le comportement dudit dispositif gestionnaire est détaillé ci-après en relation avec les Figs. 4 à 6.

Le système de communication peut comporter un ou plusieurs dispositifs gestionnaires. Il est considéré par la suite à titre illustratif, à défaut de mention contraire, que le système de communication comporte un seul dispositif gestionnaire.

Ledit dispositif gestionnaire est un des dispositifs du réseau de communication 100. Ledit dispositif gestionnaire est typiquement un dispositif de communication via lequel l'utilisateur interagit pour contrôler le système de communication. De manière illustrative, le dispositif de présentation de contenu 141 joue le rôle dudit dispositif gestionnaire.

Les Figs. 2A à 2D illustrent schématiquement des exemples d'architecture matérielle de dispositifs de communication du système de communication.

Ces exemples d'architecture matérielle reposent sur une base commune selon laquelle chaque dispositif de communication comporte, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) ; et un ensemble d'interfaces 214 permettant audit dispositif de communication de communiquer au sein dudit système de communication.

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif de communication est mis sous tension, le processeur 210 est capable de lire de la RAM 211 des instructions et de les exécuter. Ces instructions forment un programme d'ordinateur causant la mise en œuvre, par le processeur 210, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

Chaque exemple d'architecture matérielle comporte en outre une ou plusieurs ressources matérielles spécifiques au dispositif de communication auquel ladite architecture matérielle est adaptée. Cet aspect est détaillé ci-après.

La Fig. 2A illustre schématiquement un exemple d'architecture matérielle du dispositif de présentation de contenu 141. Selon cet exemple d'architecture matérielle, le dispositif de présentation de contenu 141 comporte en outre une interface homme-machine 215 permettant d'interagir avec l'utilisateur, notamment d'afficher via un écran des services globalement disponibles au sein du système de communication et de recevoir des commandes de la part de l'utilisateur. L'interface homme-machine 215 est plus particulièrement adaptée pour afficher via l'écran un ou plusieurs contenus vidéo (par exemple en mode PIP « Picture-In-Picture » en anglais) et/ou pour diffuser via des haut-parleurs un contenu audio. L'interface homme-machine 215 peut être adaptée pour permettre à l'utilisateur de fournir, *e.g.* saisir, des données personnelles d'identification, permettant ainsi de déterminer quel est le profil de l'utilisateur *(e.g.* âge, sexe, droits d'accès) parmi une liste de profils prédéterminés.

La Fig. 2B illustre schématiquement un exemple d'architecture matérielle du premier dispositif STB 121. Selon cet exemple d'architecture matérielle, le premier dispositif STB 121 comporte en outre un premier syntoniseur 230 et un second syntoniseur 231. Ces syntoniseurs peuvent fournir au moins pour certains contenus audio et/ou vidéo des flux de données avec des caractéristiques différentes, comme par exemple des résolutions différentes, et/ou ces syntoniseurs peuvent permettre de capter des ensembles différents (éventuellement avec chevauchement) de chaînes télévisées. Chaque syntoniseur est ainsi apte à recevoir des contenus audio et/ou vidéo par le biais d'un réseau de communication, tel que le réseau de communication 111. Selon cet exemple d'architecture matérielle, le premier dispositif STB 121 comporte en outre un disque dur HDD 232, ou tout autre moyen de stockage de données, comme par exemple de la mémoire EEPROM (« Electrically-Erasable Programmable Read-Only Memory » en anglais) de type Flash. Le disque dur HDD 232 permet d'enregistrer des contenus audio et/ou vidéo à partir du premier syntoniseur 230 et/ou du second syntoniseur 231, et permet de fournir des contenus audio et/ou vidéo enregistrés via le réseau de communication 100. Le premier dispositif STB 121 est ainsi apte à être configuré de sorte qu'un contenu audio et/ou vidéo obtenu via le premier syntoniseur 230 soit enregistré sur le disque dur HDD 232 et/ou fourni à au moins un dispositif consommateur du réseau de communication 100 via l'interface dédiée de l'ensemble d'interfaces 214. Le premier dispositif STB 121 est aussi apte à être configuré de sorte qu'un contenu audio et/ou vidéo obtenu via le second syntoniseur 231 soit enregistré sur le disque dur HDD 232 et/ou fourni à au moins un dispositif consommateur du réseau de communication 100 via l'interface dédiée de l'ensemble d'interfaces 214. Le premier dispositif STB 121 est aussi apte à être configuré de sorte qu'un contenu audio et/ou vidéo enregistré sur le disque dur HDD 232 soit fourni à au moins un dispositif consommateur du réseau de communication 100 via l'interface dédiée de l'ensemble d'interfaces 214.

La Fig. 2C illustre schématiquement un exemple d'architecture matérielle du second dispositif STB 122. Selon cet exemple d'architecture matérielle, le second dispositif STB 122 comporte en outre un syntoniseur 240 apte à recevoir des contenus audio et/ou vidéo par le biais d'un réseau de communication, tel que le réseau de communication 112. Le second dispositif STB 122 est ainsi apte à être configuré de sorte qu'un contenu audio et/ou vidéo obtenu via le syntoniseur 240 soit fourni à au moins un dispositif consommateur du réseau de communication 100 via l'interface dédiée de l'ensemble d'interfaces 214.

La Fig. 2D illustre schématiquement un exemple d'architecture matérielle du dispositif de stockage réseau NAS 131. Selon cet exemple d'architecture matérielle, le dispositif de stockage réseau NAS 131 comporte en outre un disque dur HDD 250, ou tout autre moyen de stockage de données, comme par exemple de la mémoire EEPROM de type Flash. Le dispositif de stockage réseau NAS 131 est ainsi apte à être configuré de sorte qu'un contenu audio et/ou vidéo fourni par un dispositif source du réseau de communication 100 via l'interface dédiée de l'ensemble d'interfaces 214 soit enregistré sur le disque dur HDD 250. Le dispositif de stockage réseau NAS 131 est aussi apte à être configuré de sorte qu'un contenu audio et/ou vidéo enregistré sur le disque dur HDD 250 soit fourni à au moins un dispositif consommateur du réseau de communication 100 via l'interface dédiée de l'ensemble d'interfaces 214.

La Fig. 3 illustre schématiquement un algorithme d'annonce de services localement disponibles sur un dispositif de communication du système de communication. Dans le cadre illustratif du système de communication de la Fig. 1, l'algorithme de la Fig. 3 est plus particulièrement exécuté par le premier dispositif STB 121, par le second dispositif STB 122, par le dispositif de stockage réseau NAS 131 et par le dispositif de présentation de contenu 141.

Dans une étape 301, le dispositif de communication considéré détecte un événement impliquant que le dispositif de communication considéré annonce les services locaux que le dispositif de communication considéré est effectivement capable d'offrir. Un tel événement peut être généré par le dispositif de communication considéré après connexion au réseau de communication 100. Un tel événement peut aussi être généré par le dispositif de communication considéré sur réception d'une requête de la part du dispositif gestionnaire de services globalement disponibles au sein du système de communication. Un tel événement peut aussi être généré par le dispositif de communication considéré sur détection d'un changement d'utilisation de ses ressources matérielles (allocation ou libération) et/ou sur détection d'un débranchement (resp. branchement) de câble rendant ainsi indisponibles (resp. disponibles) des ressources matérielles du dispositif de communication considéré et/ou sur détection d'un changement de performances de communication *(e.g.* qualité de signal, taux d'erreur,...) du dispositif de communication considéré rendant indisponible au moins en partie des ressources matérielles du dispositif de communication considéré. Un tel événement peut aussi être généré par le dispositif de communication considéré sur détection d'une activation (resp. désactivation) d'un contrôle parental rendant indisponibles (resp. disponibles) certains contenus audio et/ou vidéo, et/ou rendant indisponibles (resp. disponibles) certaines ressources matérielles. Ainsi, d'une manière générale, un tel événement peut aussi être généré par le dispositif de communication considéré sur détection d'un changement de disponibilité de ses ressources matérielles.

Dans une étape 302 suivante, le dispositif de communication considéré obtient une liste de contenus audio et/ou vidéo. Cette liste de contenus audio et/ou vidéo contient un identifiant de chaque contenu audio et/ou vidéo que le dispositif de communication considéré est apte à recevoir, lorsque ledit dispositif de communication est un dispositif consommateur. Cette liste de contenus audio et/ou vidéo contient un identifiant de chaque contenu audio et/ou vidéo que le dispositif de communication considéré est apte à fournir, lorsque ledit dispositif de communication est un dispositif source.

Lorsque le contenu audio et/ou vidéo est un contenu diffusé via une chaîne télévisée, l'identifiant de contenu audio et/ou vidéo peut être obtenu à partir d'un guide des programmes, défini afin qu'une même chaîne télévisée diffusée via deux réseaux de communication distincts (comme les réseaux de communication 111 et 112) n'ait qu'un seul identifiant et soit donc effectivement perçue comme un même contenu audio et/ou vidéo. Cet identifiant est par exemple le nom de la chaîne télévisée concernée.

Lorsque le contenu audio et/ou vidéo est un contenu enregistré, l'identifiant est tiré de métadonnées associées au fichier dans lequel est stocké le contenu audio et/ou vidéo. Ces métadonnées peuvent typiquement contenir des chaînes de caractères saisies par l'utilisateur au moment d'ordonner l'enregistrement, ou des données automatiquement obtenues par un dispositif de communication connecté au réseau de communication 100 au moment d'ordonner l'enregistrement (comme ce serait le cas dans un service de décalage du direct (« time shifting » en anglais)). Ces métadonnées contiennent préférentiellement des informations de format, *e.g.* résolution, sous lequel ledit contenu audio et/ou vidéo a été enregistré.

Lorsque le contenu audio et/ou vidéo est un contenu que le dispositif de communication considéré est apte à recevoir en provenance du réseau de communication 100, ledit contenu audio et/ou vidéo est identifié par un premier identifiant prédéfini, qui n'est ainsi pas représentatif du contenu audio et/ou vidéo lui-même, mais du fait que le dispositif de communication considéré est apte à recevoir un tel contenu audio et/ou vidéo via son interface avec le réseau de communication 100. Ledit premier identifiant prédéfini est préférentiellement associé à des informations de formats, *e.g.* résolution, sous lesquels ledit contenu audio et/ou vidéo est accepté.

Lorsque le contenu audio et/ou vidéo est un contenu que le dispositif de communication considéré est apte à fournir via le réseau de communication 100, ledit contenu audio et/ou vidéo est identifié par un second identifiant prédéfini, qui n'est ainsi pas représentatif du contenu audio et/ou vidéo lui-même, mais du fait que le dispositif de communication considéré est apte à fournir un tel contenu audio et/ou vidéo via son interface avec le réseau de communication 100. Ledit second identifiant prédéfini est préférentiellement associé à des informations de formats, *e.g.* résolution, sous lesquels ledit contenu audio et/ou vidéo peut être fourni.

De manière illustrative, en considérant que le dispositif de stockage réseau NAS 131 dispose des ressources matérielles pour enregistrer un ou plusieurs contenus audio et/ou vidéo et simultanément fournir un ou plusieurs contenus audio et/ou vidéo enregistré, via son interface avec le réseau de communication 100, le dispositif de stockage réseau NAS 131 obtient alors une liste dans laquelle apparaissent les identifiants des contenus audio et/ou vidéo enregistrés par le dispositif de stockage réseau NAS 131, ainsi que ledit premier identifiant prédéfini et ledit second identifiant prédéfini. Lorsque le dispositif de communication considéré ne manipule pas de contenus audio et/ou vidéo, l'étape 302 n'est pas effectuée. L'étape 302 est donc, en ce sens, optionnelle.

Dans une étape 303 suivante, le dispositif de communication considéré obtient une liste de services locaux possibles, c'est-à-dire une liste d'actions que le dispositif de communication considéré peut réaliser pour le compte de l'utilisateur grâce à ses ressources matérielles (indépendamment de la disponibilité effective desdites ressources matérielles à ce stade). Quand applicable, le dispositif de communication considéré obtient une liste de services locaux possibles pour chaque contenu audio et/ou vidéo, c'est-à-dire une liste d'actions que le dispositif de communication considéré peut réaliser pour le compte de l'utilisateur vis-à-vis des contenus audio et/ou vidéo listé dans l'étape 302. Pour déterminer les services locaux possibles pour chaque contenu audio et/ou vidéo, le dispositif de communication concerné peut s'appuyer sur les informations de formats associées à l'identifiant dudit contenu audio et/ou vidéo.

De manière illustrative, le premier dispositif STB 121 offre les services locaux suivants : fournir une chaîne télévisée en haute-résolution via le réseau de communication 100 *(e.g.* grâce au premier syntoniseur 230) ; fournir une chaîne télévisée en résolution standard via le réseau de communication 100 *(e.g.* grâce au second syntoniseur 231) ; enregistrer en interne une chaîne télévisée en résolution standard *(e.g.* le disque dur HDD 232 peut être seulement capable d'enregistrer en résolution standard) ; fournir un contenu audio et/ou vidéo enregistré en interne ; enregistrer en interne un contenu audio et/ou vidéo en provenance du réseau de communication 100 ; mettre à jour un microprogramme de contrôle du premier dispositif STB 121 ; ...

Dans une étape 304 suivante, le dispositif de communication considéré obtient une liste de ressources matérielles dudit dispositif de communication considéré qui sont nécessaires pour mettre en œuvre chaque service local possible identifié à l'étape 303. Les ressources matérielles nécessaires pour mettre en œuvre chaque service local que le dispositif de communication considéré peut offrir sont prédéfinies. Lorsque le service local considéré s'applique vis-à-vis d'un contenu audio et/ou vidéo, lesdites ressources matérielles nécessaires sont prédéfinies notamment en fonction de la provenance *(e.g.* en sortie de syntoniseur, ou dans la mémoire interne) et éventuellement du format, *e.g.* de la résolution, du contenu audio et/ou vidéo.

Dans une étape 305 suivante, le dispositif de communication considéré obtient une liste de ses ressources matérielles occupées *(e.g.* utilisation en cours dudit dispositif de communication). Une liste de ses ressources matérielles encore disponibles est équivalente. Le dispositif de communication considéré effectue ainsi une évaluation de la disponibilité effective de ses ressources matérielles.

Dans un mode de réalisation particulier, le dispositif de communication considéré prend en compte des réservations programmées de services locaux dudit dispositif de communication considéré. Le dispositif de communication considéré planifie alors, *e.g.* sur requête utilisateur, des utilisations de ses services locaux ou d'une manière plus générale de ses ressources matérielles. Si la planification montre que des ressources matérielles doivent être occupées dans une période de temps qui débute dans un délai inférieur à un seuil prédéfini *(e.g.* quinze minutes), le dispositif de communication considéré peut estimer que les ressources matérielles concernées par cette utilisation planifiée ne sont pas disponibles. Une telle planification peut être au moins partiellement obtenue par analyse statistique des actions réalisées par ledit dispositif de communication au fil du temps.

Dans une étape 306 suivante, le dispositif de communication considéré raffine la liste de services locaux possibles obtenue à l'étape 303, d'après les ressources matérielles dudit dispositif de communication considéré qui sont nécessaires pour mettre en œuvre chaque service local possible et d'après la disponibilité effective desdites ressources matérielles. Le dispositif de communication considéré écarte les services locaux utilisant au moins une ressource matérielle qui n'est pas disponible. Le dispositif de communication considéré obtient alors une liste de services locaux disponibles.

Dans un mode de réalisation particulier, le dispositif de communication considéré raffine aussi la liste de services locaux possibles obtenue à l'étape 303, d'après un profil utilisateur qui serait préalablement communiqué par le dispositif gestionnaire de services globalement disponibles au sein du système de communication et des règles prédéfinies qui prennent en compte ledit profil utilisateur. Ledit dispositif de communication écarte ainsi chaque service local incompatible avec ledit profil utilisateur. Par exemple, le dispositif de communication considéré interdit ou pas l'accès à certains services locaux en fonction de l'âge de l'utilisateur pour le compte duquel ledit dispositif gestionnaire agit. Comme évoqué ci-après en relation avec la Fig. 6, cette étape de raffinement peut en variante être mise en œuvre par ledit dispositif gestionnaire.

Dans une étape 307 suivante, le dispositif de communication considéré annonce, via le réseau de communication 100, la liste de services locaux disponibles *(i.e.* localement et effectivement disponibles) obtenue à l'étape 306.

Quand applicable, chaque contenu audio et/ou vidéo pour lequel aucun service local ne peut être offert au vu de la disponibilité effective des ressources matérielles du dispositif de communication considéré n'est pas annoncé.

Dans un mode de réalisation particulier, le dispositif de communication considéré indique dans l'annonce la liste de services locaux disponibles parmi la liste des services locaux possibles.

Dans un mode de réalisation particulier, le dispositif de communication considéré effectue l'annonce conformément au protocole SSDP (« Simple Service Discovery Protocol » en anglais).

L'algorithme de la Fig. 3 propose donc une phase d'annonce qui est mise en œuvre par un dispositif de communication sur détection de changement de disponibilité d'au moins une de ses ressources matérielles.

La Fig. 4 illustre schématiquement un algorithme de collecte d'informations relatives à des services localement disponibles sur des dispositifs de communication connectés au réseau de communication 100. L'algorithme de la Fig. 4 est exécuté par le dispositif gestionnaire de services globalement disponibles au sein du système de communication.

Dans une étape 401, ledit dispositif gestionnaire s'initialise. Cette étape d'initialisation peut faire suite à une élection au sein du réseau de communication 100 pour déterminer quel dispositif de communication prend le rôle dudit dispositif gestionnaire. Cette étape d'initialisation peut faire suite à une mise en marche dudit dispositif gestionnaire (lorsque ledit dispositif gestionnaire est prédéfini ou lorsque plusieurs tels dispositifs gestionnaires sont présents dans le système de communication).

Dans une étape 402 suivante, ledit dispositif gestionnaire envoie une requête demandant à chaque autre dispositif de communication connecté au réseau de communication 100 d'annoncer la liste de services localement disponibles sur ledit autre dispositif de communication. Ledit dispositif gestionnaire peut inclure dans la requête, ou dans un message séparé, une information représentative d'un profil utilisateur auquel ladite requête est applicable. Cela permet à chaque dispositif de communication de raffiner son annonce en fonction dudit profil utilisateur. Les annonces peuvent ainsi être diffusées (la même annonce pour tout dit dispositif gestionnaire) ou être envoyées en point-à-point (annonce adaptée au profil de l'utilisateur pour le compte duquel ledit dispositif gestionnaire concerné agit). Ledit dispositif gestionnaire détecte ensuite des réceptions d'annonces de listes de services locaux disponibles, telles qu'envoyées par exécution de l'étape 307 par chaque autre dispositif de communication.

Dans une étape 403 suivante, ledit dispositif gestionnaire collecte les listes de services locaux disponibles contenues dans les annonces reçues. Pour ce qui concerne des services locaux vis-à-vis de contenus audio et/ou vidéo, ledit dispositif gestionnaire collecte préférentiellement les informations de format desdits contenu audio et/ou vidéo. Une fois collectées les listes de services locaux disponibles, ledit dispositif gestionnaire doit déterminer les services globalement disponibles au sein du système de communication. Cet aspect est détaillé ci-après en relation avec la Fig. 6.

Dans une étape 404 suivante, ledit dispositif gestionnaire active un mécanisme de suivi des services locaux disponibles. Ce mécanisme est détaillé ci-après en relation avec la Fig. 5.

La Fig. 5 illustre schématiquement un algorithme de suivi de services localement disponibles sur les dispositifs de communication connectés au réseau de communication 100. L'algorithme de la Fig. 5 est un mécanisme de suivi des services locaux disponibles sur les dispositifs de communication connectés au réseau de communication 100, et est exécuté par chaque dispositif gestionnaire de services globalement disponibles au sein du système de communication.

Dans une étape 501, ledit dispositif gestionnaire détecte au moins une nouvelle annonce telle qu'envoyée par exécution de l'étape 307 et ainsi reçue en provenance du réseau de communication 100. Une telle annonce peut faire suite à une apparition d'un nouveau dispositif de communication sur le réseau de communication, ou à un changement dans la disponibilité des ressources matérielles d'au moins un dispositif de communication.

Dans une étape 502 suivante, ledit dispositif gestionnaire collecte les listes de services locaux disponibles contenues dans les annonces reçues. Pour ce qui concerne des services locaux vis-à-vis de contenus audio et/ou vidéo, ledit dispositif gestionnaire collecte préférentiellement les informations de format desdits contenus audio et/ou vidéo. Ledit dispositif gestionnaire met ainsi à jour la liste de services locaux disponibles pour chaque dispositif de communication ayant transmis une annonce reçue à l'étape 501.

De manière similaire, ledit dispositif gestionnaire efface la liste de services locaux disponibles pour chaque dispositif de communication que ledit dispositif gestionnaire a détecté comme étant déconnecté du réseau de communication 100.

Une fois mises à jour les listes de services locaux disponibles, ledit dispositif gestionnaire doit mettre à jour les services globalement disponibles au sein du système de communication. Cet aspect est détaillé ci-après en relation avec la Fig. 6.

La Fig. 6 illustre schématiquement un algorithme de mise à disposition de services globalement disponibles au sein du système de communication. L'algorithme de la Fig. 6 est exécuté par le dispositif gestionnaire de services globalement disponibles au sein du système de communication.

Dans une étape 601, ledit dispositif gestionnaire détecte que des listes de services locaux disponibles ont été collectées ou mises à jour.

Dans une étape 602 suivante, ledit dispositif gestionnaire détermine des services globalement disponibles au sein du système de communication à partir des listes de services locaux disponibles qui ont été collectées ou mises à jour. En d'autres termes, le dispositif gestionnaire détermine quels services sont effectivement mis à disposition de l'utilisateur au vu de la disponibilité effective des ressources matérielles du système de communication. Chaque service globalement disponible au sein du système de communication est défini par un service local disponible, ou une chaîne de services locaux disponibles. Pour ce qui concerne les contenus audio et/ou vidéo, chaque service globalement disponible au sein du système de communication est défini par un service local disponible, ou une chaîne de services locaux disponibles, applicable auxdits contenus audio et/ou vidéo afin d'être consommés.

Le dispositif gestionnaire détermine chaque service globalement disponible au sein du système de communication, en sélectionnant un service local disponible ou en combinant des services locaux disponibles, selon des règles prédéfinies. Ces règles assurent que chaque service proposé à l'utilisateur est cohérent au niveau système. De manière illustrative, ledit dispositif gestionnaire détermine les services globalement disponibles au sein du système de communication suivants d'après les listes de services locaux disponibles collectées ou mises à jour : visualiser une chaîne télévisée en haute résolution ; enregistrer une chaîne télévisée en haute résolution ; enregistrer une chaîne télévisée en résolution standard ; visualiser un contenu enregistré ; jouer à un jeu en ligne ; accéder à un site web ; mettre à jour un microprogramme d'un dispositif de communication ; ...

De manière illustrative, si le dispositif de stockage réseau NAS 131 a annoncé un service local disponible de type « enregistrer en interne un contenu audio et/ou vidéo en provenance du réseau de communication 100 » et que le second dispositif STB 122 a annoncé un service local disponible du type « fournir une chaîne télévisée en résolution standard via le réseau de communication 100 », ledit dispositif gestionnaire peut offrir un service globalement disponible au sein du système de communication du type « enregistrer une chaîne télévisée en résolution standard ».

La liste des services globalement disponibles au sein du système de communication est ainsi dynamiquement mise à jour au fur et à mesure des annonces diffusées via le réseau de communication 100, qui elles-mêmes sont diffusées suite à des changements de disponibilité des ressources matérielles des dispositifs de communication connectés au réseau de communication 100. Ledit dispositif gestionnaire est capable de déterminer la liste des services globalement disponibles au sein du système de communication parmi les services globalement possibles au sein du système de communication.

Dans un mode de réalisation particulier, ledit dispositif gestionnaire raffine la liste de services globalement disponibles au sein du système de communication, d'après un profil utilisateur qui est associé à l'utilisateur pour le compte duquel ledit dispositif gestionnaire agit et des règles prédéfinies qui prennent en compte ledit profil utilisateur. Ledit dispositif gestionnaire écarte ainsi chaque service globalement disponible au sein du système de communication qui est incompatible avec ledit profil utilisateur. Par exemple, ledit dispositif gestionnaire interdit ou pas l'accès à certains services globalement disponibles au sein du système de communication en fonction de l'âge de l'utilisateur pour le compte duquel ledit dispositif gestionnaire agit.

Dans une étape 603 suivante, ledit dispositif gestionnaire met à disposition de l'utilisateur, ou de tout autre dispositif de communication connecté au réseau de communication 100 qui peut interagir avec l'utilisateur, la liste des services globalement disponibles au sein du réseau de communication. Au vu de ce qui précède, cette mise à disposition peut dépendre du profil de l'utilisateur en question.

Dans des systèmes de communication où des conflits de commandes ou de réservation de ressources matérielles peuvent survenir, un dispositif de communication connecté au réseau de communication 100 qui peut interagir avec l'utilisateur peut afficher un message d'alerte et demander éventuellement à l'utilisateur quel choix opérer. Dans de telles situations, un dispositif de communication connecté au réseau de communication 100 peut en variante décider du choix à opérer (quel service refuser ou accepter), selon des règles prédéfinies.

## Revendications

1. Procédé mis en œuvre par un dispositif de communication (121 ; 122) d'un système de communication, ledit dispositif de communication est connecté via un réseau de communication (100) à d'autres dispositifs de communication (131 ; 141) dudit système de communication,
**caractérisé en ce que**, sur détection de changement de disponibilité d'au moins une de ses ressources matérielles, le changement de disponibilité étant lié à la connexion du dispositif de communication au réseau de communication et/ou à un changement d'utilisation des ressources matérielles et/ou de branchement/débranchement d'un câble, le dispositif de communication effectue une phase d'annonce comportant les étapes suivantes :
- obtenir (303) une liste de services locaux possibles correspondant à des actions que ledit dispositif de communication est apte à implémenter en s'appuyant sur ses ressources matérielles, les services locaux possibles étant des services comportant au moins une des fonctions suivantes :
- traitement de contenus audio et/ou vidéo,
- mise à disposition pour présentation de contenus audio et/ou vidéo,
- enregistrement de contenus audio et/ou vidéo,
- configuration dudit dispositif de communication,
- mise à jour de microprogramme dudit dispositif de communication,
- accès à des jeux en ligne,
- accès à des sites web ;
- obtenir (304) une liste de ressources matérielles dudit dispositif de communication qui sont nécessaires pour offrir lesdits services locaux, les ressources matérielles étant au moins un syntoniseur et/ou au moins un espace de stockage de données et/ou au moins une interface de communication et/ou une webcam intégrée et/ou au moins un composant dédié à un traitement particulier;
- obtenir (306) une liste de services locaux disponibles parmi les services locaux possibles, d'après les ressources matérielles nécessaires pour offrir lesdits services locaux et d'après la disponibilité effective de ses ressources matérielles, le dispositif de communication prenant en compte une planification de réservations de services locaux dudit dispositif de communication, de telle sorte que, lorsque la planification montre que des ressources matérielles doivent être occupées dans une période de temps qui débute dans un délai inférieur à un seuil prédéfini, ledit dispositif de communication considère que lesdites ressources matérielles ne sont pas disponibles ; et
- annoncer (307), via le réseau de communication, la liste de services locaux disponibles obtenue, afin de permettre à au moins un dispositif gestionnaire de présenter des services globalement disponibles au sein du système de communication grâce à des listes de services locaux disponibles annoncées par les dispositifs de communication dudit système de communication.

2. Procédé selon la revendication 1, **caractérisé en ce que**, dans la phase d'annonce, le dispositif de communication considéré indique la liste de services locaux disponibles parmi la liste des services locaux possibles.

3. Procédé selon l'une quelconque des revendications 1 et 2, **caractérisé en ce que** la phase d'annonce est en outre effectuée sur réception d'une requête d'un dit dispositif gestionnaire.

4. Procédé selon la revendication 3, **caractérisé en ce que** ladite requête est associée à une information représentative d'un profil utilisateur, et **en ce que** ledit dispositif de communication raffine la liste de services locaux disponibles en écartant chaque service local incompatible avec ledit profil utilisateur.

5. Procédé selon l'une quelconque des revendications 1 à 4, **caractérisé en ce que** la phase d'annonce comporte les étapes suivantes :
- obtenir (302) une liste de contenus audio et/ou vidéo contenant un identifiant de chaque contenu audio et/ou vidéo que ledit dispositif de communication est apte à recevoir, lorsque ledit dispositif de communication est un dispositif consommateur de contenus audio et/ou vidéo, et un identifiant de chaque contenu audio et/ou vidéo que ledit dispositif de communication est apte à fournir, lorsque ledit dispositif de communication est un dispositif source de contenus audio et/ou vidéo ;
- obtenir (303) une liste des services locaux possibles vis-à-vis de chaque contenu audio et/ou vidéo ; et
- annoncer (307) la liste des services locaux, vis-à-vis de chaque contenu audio et/ou vidéo, qui sont disponibles.

6. Procédé selon l'une quelconque des revendications 1 à 4, **caractérisé en ce que** chaque dispositif de communication dudit système de communication effectue la phase d'annonce sur détection de changement de disponibilité d'au moins une de ses ressources matérielles, et **en ce que** chaque dispositif gestionnaire détermine des services globalement disponibles au sein du système de communication à partir des listes de services locaux disponibles tels qu'annoncés par les dispositifs de communication dudit système de communication.

7. Procédé selon la revendication 6, **caractérisé en ce que** chaque dispositif gestionnaire détermine chaque service globalement disponible au sein du système de communication, en sélectionnant un service local disponible ou en combinant des services locaux disponibles, selon des règles prédéfinies.

8. Procédé selon l'une quelconque des revendications 6 et 7, **caractérisé en ce que** chaque dispositif gestionnaire raffine la liste de services globalement disponibles au sein du système de communication, en écartant chaque service globalement disponible au sein du système de communication qui est incompatible avec un profil utilisateur.

9. Programme d'ordinateur, **caractérisé en ce qu'**il comprend des instructions pour mettre en œuvre, par un processeur d'un dispositif de communication, le procédé selon l'une quelconque des revendications 1 à 7, lorsque ledit programme est exécuté par ledit processeur.

10. Moyens de stockage, **caractérisés en ce qu'**ils stockent un programme d'ordinateur comprenant des instructions pour mettre en œuvre, par un processeur d'un dispositif de communication, le procédé selon l'une quelconque des revendications 1 à 5, lorsque ledit programme est exécuté par ledit processeur.

11. Dispositif de communication (121 ; 122) destiné à être utilisé dans un système de communication, ledit dispositif de communication étant destiné à être connecté via un réseau de communication (100) à d'autres dispositifs de communication (131 ; 141) dudit système de communication,
**caractérisé en ce que** le dispositif de communication comporte des moyens pour effectuer une phase d'annonce, sur détection de changement de disponibilité d'au moins une de ses ressources matérielles le changement de disponibilité étant lié à la connexion du dispositif de communication au réseau de communication et/ou à un changement d'utilisation des ressources matérielles et/ou de branchement/débranchement d'un câble, en implémentant :
- des moyens pour obtenir (303) une liste de services locaux possibles correspondant à des actions que ledit dispositif de communication est apte à implémenter en s'appuyant sur ses ressources matérielles ; les services locaux possibles étant des services comportant au moins une des fonctions suivantes :
- traitement de contenus audio et/ou vidéo,
- mise à disposition pour présentation de contenus audio et/ou vidéo,
- enregistrement de contenus audio et/ou vidéo,
- configuration dudit dispositif de communication,
- mise à jour de microprogramme dudit dispositif de communication,
- accès à des jeux en ligne,
- accès à des sites web,
- des moyens pour obtenir (304) une liste de ressources matérielles dudit dispositif de communication qui sont nécessaires pour offrir lesdits services locaux, les ressources matérielles étant au moins un syntoniseur et/ou au moins un espace de stockage de données et/ou au moins une interface de communication et/ou une webcam intégrée et/ou au moins un composant dédié à un traitement particulier ;
- des moyens pour obtenir (306) une liste de services locaux disponibles parmi les services locaux possibles, d'après les ressources matérielles nécessaires pour offrir lesdits services locaux et d'après la disponibilité effective de ses ressources matérielles, le dispositif de communication prenant en compte une planification de réservations de services locaux dudit dispositif de communication, de telle sorte que, lorsque la planification montre que des ressources matérielles doivent être occupées dans une période de temps qui débute dans un délai inférieur à un seuil prédéfini, ledit dispositif de communication considère que lesdites ressources matérielles ne sont pas disponibles ; et
- des moyens pour annoncer (307), via le réseau de communication, la liste de services locaux disponibles obtenue, afin de permettre à au moins un dispositif gestionnaire de présenter des services globalement disponibles au sein du système de communication grâce à des listes de services locaux disponibles annoncées par les dispositifs de communication dudit système de communication.

## Patentansprüche

1. Verfahren, das von einer Kommunikationsvorrichtung (121; 122) eines Kommunikationssystems durchgeführt wird, wobei die Kommunikationsvorrichtung über ein Kommunikationsnetz (100) mit anderen Kommunikationsvorrichtungen (131; 141) des Kommunikationssystems verbunden ist,
**dadurch gekennzeichnet, dass** bei Erfassung einer Verfügbarkeitsänderung mindestens einer ihrer Hardware-Ressourcen, wobei die Verfügbarkeitsänderung mit der Verbindung der Kommunikationsvorrichtung mit dem Kommunikationsnetz und/oder mit einer Nutzungsänderung der Hardware-Ressourcen und/oder mit einem Anschließen/Trennen eines Kabels verbunden ist, die Kommunikationsvorrichtung eine Ankündigungsphase ausführt, die die folgenden Schritte aufweist:
- Erhalt (303) einer Liste möglicher lokaler Dienste, die Aktionen entsprechen, die die Kommunikationsvorrichtung implementieren kann, indem sie sich auf ihre Hardware-Ressourcen stützt, wobei die möglichen lokalen Dienste Dienste sind, die mindestens eine der folgenden Funktionen aufweisen:
- Verarbeitung von Audio- und/oder Videoinhalten,
- Zurverfügungstellung von Audio- und/oder Videoinhalten zur Präsentierung,
- Speichern von Audio- und/oder Videoinhalten,
- Konfiguration der Kommunikationsvorrichtung,
- Mikroprogramm-Aktualisierung der Kommunikationsvorrichtung,
- Zugriff auf Onlinespiele,
- Zugriff auf Webseiten;
- Erhalt (304) einer Liste von Hardware-Ressourcen der Kommunikationsvorrichtung, die notwendig sind, um die lokalen Dienste anzubieten, wobei die Hardware-Ressourcen mindestens ein Tuner und/oder mindestens ein Datenspeicherraum und/oder mindestens eine Kommunikationsschnittstelle und/oder eine integrierte Webcam und/oder mindestens ein für eine besondere Verarbeitung spezifisches Bauteil sind;
- Erhalt (306) einer Liste verfügbarer lokaler Dienste unter den möglichen lokalen Diensten gemäß den notwendigen Hardware-Ressourcen, um die lokalen Dienste anzubieten, und gemäß der tatsächlichen Verfügbarkeit ihrer Hardware-Ressourcen, wobei die Kommunikationsvorrichtung eine Planung von Reservierungen lokaler Dienste der Kommunikationsvorrichtung berücksichtigt, so dass, wenn die Planung zeigt, dass Hardware-Ressourcen während eines Zeitraums besetzt werden sollen, der in einer geringeren Frist als eine vordefinierte Schwelle beginnt, die Kommunikationsvorrichtung annimmt, dass die Hardware-Ressourcen nicht verfügbar sind; und
- Ankündigung (307) der erhaltenen Liste verfügbarer lokaler Dienste über das Kommunikationsnetz, um es mindestens einer Verwaltungsvorrichtung zu erlauben, global innerhalb des Kommunikationssystems verfügbare Dienste dank Listen verfügbarer lokaler Dienste zu präsentieren, die von den Kommunikationsvorrichtungen des Kommunikationssystems angekündigt werden.

2. Verfahren nach Anspruch 1, **dadurch gekennzeichnet, dass** in der Ankündigungsphase die berücksichtigte Kommunikationsvorrichtung die Liste verfügbarer lokaler Dienste aus der Liste der möglichen lokalen Dienste anzeigt.

3. Verfahren nach einem der Ansprüche 1 und 2, **dadurch gekennzeichnet, dass** die Ankündigungsphase außerdem bei Empfang einer Anforderung von einer Verwaltungsvorrichtung ausgeführt wird.

4. Verfahren nach Anspruch 3, **dadurch gekennzeichnet, dass** die Anforderung einer für ein Benutzerprofil repräsentativen Information zugeordnet ist, und dass die Kommunikationsvorrichtung die Liste verfügbarer lokaler Dienste verfeinert, indem sie jeden nicht mit dem Benutzerprofil kompatiblen lokalen Dienst entfernt.

5. Verfahren nach einem der Ansprüche 1 bis 4, **dadurch gekennzeichnet, dass** die Ankündigungsphase die folgenden Schritte aufweist:
- Erhalt (302) einer Liste von Audio- und/oder Videoinhalten, die eine Kennung jedes Audio- und/oder Videoinhalts, die die Kommunikationsvorrichtung empfangen kann, wenn die Kommunikationsvorrichtung eine Verbrauchervorrichtung von Audio- und/oder Videoinhalten ist, und eine Kennung jedes Audio- und/oder Videoinhalts enthält, den die Kommunikationsvorrichtung liefern kann, wenn die Kommunikationsvorrichtung eine Quellenvorrichtung von Audio- und/oder Videoinhalten ist;
- Erhalt (303) einer Liste der möglichen lokalen Dienste gegenüber jedem Audio- und/oder Videoinhalt; und
- Ankündigung (307) der Liste der lokalen Dienste gegenüber jedem Audio- und/oder Videoinhalt, die verfügbar sind.

6. Verfahren nach einem der Ansprüche 1 bis 4, **dadurch gekennzeichnet, dass** jede Kommunikationsvorrichtung des Kommunikationssystems die Ankündigungsphase bei Erfassung einer Verfügbarkeitsänderung mindestens einer ihrer Hardware-Ressourcen ausführt, und dass jede Verwaltungsvorrichtung global verfügbare Dienste innerhalb des Kommunikationssystems ausgehend von den Listen verfügbarer lokaler Dienste bestimmt, wie sie von den Kommunikationsvorrichtungen des Kommunikationssystems angekündigt werden.

7. Verfahren nach Anspruch 6, **dadurch gekennzeichnet, dass** jede Verwaltungsvorrichtung jeden global verfügbaren Dienst innerhalb des Kommunikationssystems bestimmt, indem sie einen verfügbaren lokalen Dienst auswählt, oder indem sie verfügbare lokale Dienste gemäß vordefinierten Regeln kombiniert.

8. Verfahren nach einem der Ansprüche 6 und 7, **dadurch gekennzeichnet, dass** jede Verwaltungsvorrichtung die Liste global verfügbarer Dienste innerhalb des Kommunikationssystems verfeinert, indem sie jeden global innerhalb des Kommunikationssystems verfügbaren Dienst entfernt, der nicht mit einem Benutzerprofil kompatibel ist.

9. Computerprogramm, **dadurch gekennzeichnet, dass** es Anweisungen zur Durchführung des Verfahrens nach einem der Ansprüche 1 bis 7 durch einen Prozessor einer Kommunikationsvorrichtung enthält, wenn das Programm vom Prozessor ausgeführt wird.

10. Speichereinrichtungen, **dadurch gekennzeichnet, dass** sie ein Computerprogramm speichern, das Anweisungen zur Durchführung des Verfahrens nach einem der Ansprüche 1 bis 5 durch einen Prozessor einer Kommunikationsvorrichtung enthält, wenn das Programm vom Prozessor ausgeführt wird.

11. Kommunikationsvorrichtung (121; 122), die dazu bestimmt ist, in einem Kommunikationssystem verwendet zu werden, wobei die Kommunikationsvorrichtung dazu bestimmt ist, über ein Kommunikationsnetz (100) mit anderen Kommunikationsvorrichtungen (131; 141) des Kommunikationssystems verbunden zu werden,
**dadurch gekennzeichnet, dass** die Kommunikationsvorrichtung Einrichtungen aufweist, um bei Erfassung einer Verfügbarkeitsänderung mindestens einer ihrer Hardware-Ressourcen eine Ankündigungsphase auszuführen, wobei die Verfügbarkeitsänderung mit der Verbindung der Kommunikationsvorrichtung mit dem Kommunikationsnetz und/oder mit einer Benutzungsänderung der Hardware-Ressourcen und/oder mit dem Anschließen/Trennen eines Kabels verbunden ist, indem sie implementiert:
- Einrichtungen zum Erhalt (303) einer Liste möglicher lokaler Dienste, die Aktionen entsprechen, die die Kommunikationsvorrichtung implementieren kann, indem sie sich auf ihre Hardware-Ressourcen stützt, wobei die möglichen lokalen Dienste Dienste sind, die mindestens eine der folgenden Funktionen aufweisen:
- Verarbeitung von Audio- und/oder Videoinhalten,
- Zurverfügungstellung von Audio- und/oder Videoinhalten zur Präsentierung,
- Speichern von Audio- und/oder Videoinhalten,
- Konfiguration der Kommunikationsvorrichtung,
- Mikroprogramm-Aktualisierung der Kommunikationsvorrichtung,
- Zugriff auf Onlinespiele,
- Zugriff auf Webseiten;
- Einrichtungen zum Erhalt (304) einer Liste von Hardware-Ressourcen der Kommunikationsvorrichtung, die notwendig sind, um die lokalen Dienste anzubieten, wobei die Hardware-Ressourcen mindestens ein Tuner und/oder mindestens ein Datenspeicherraum und/oder mindestens eine Kommunikationsschnittstelle und/oder eine integrierte Webcam und/oder mindestens ein für eine besondere Verarbeitung spezifisches Bauteil sind;
- Einrichtungen zum Erhalt (306) einer Liste verfügbarer lokaler Dienste unter den möglichen lokalen Diensten gemäß den notwendigen Hardware-Ressourcen, um die lokalen Dienste anzubieten, und gemäß der tatsächlichen Verfügbarkeit ihrer Hardware-Ressourcen, wobei die Kommunikationsvorrichtung eine Planung von Reservierungen lokaler Dienste der Kommunikationsvorrichtung berücksichtigt, so dass, wenn die Planung zeigt, dass Hardware-Ressourcen während eines Zeitraums besetzt werden sollen, der in einer geringeren Frist als eine vordefinierte Schwelle beginnt, die Kommunikationsvorrichtung annimmt, dass die Hardware-Ressourcen nicht verfügbar sind; und
- Einrichtungen zur Ankündigung (307) der erhaltenen Liste verfügbarer lokaler Dienste über das Kommunikationsnetz, um es mindestens einer Verwaltungsvorrichtung zu erlauben, global innerhalb des Kommunikationssystems verfügbare Dienste dank Listen verfügbarer lokaler Dienste zu präsentieren, die von den Kommunikationsvorrichtungen des Kommunikationssystems angekündigt werden.

## Claims

1. Method implemented by a communication device (121; 122) of a communication system, said communication device being connected via a communication network (100) to other communication devices (131; 141) of said communication system,
**characterized in that**, on detection of a change in availability of at least one of its hardware resources, the change in availability being linked to the connection of the communication device to the communication network and/or to a change in use of the hardware resources and/or connection/disconnection of a cable, the communication device carries out an advertisement phase comprising the following steps:
- obtaining (303) a list of possible local services corresponding to actions which said communication device is able to implement using its hardware resources, the possible local services being services comprising at least one of the following functions:
- processing audio and/or video content,
- making audio and/or video content available for display,
- storing audio and/or video content,
- configuring said communication device,
- updating firmware of said communication device,
- accessing online games,
- accessing websites;
- obtaining (304) a list of hardware resources of said communication device which are necessary for offering said local services, the hardware resources being at least one tuner and/or at least one data storage space and/or at least one communication interface and/or an integrated webcam and/or at least one component dedicated to a particular processing operation;
- obtaining (306) a list of available local services among the possible local services, based on the hardware resources which are necessary for offering said local services and based on the actual availability of its hardware resources, the communication device taking into account a schedule of reservations of local services of said communication device, so that, when the schedule shows that hardware resources should be occupied for a period of time which starts in a time less than a predefined threshold, said communication device considers that said hardware resources are not available; and
- advertising (307), via the communication network, the obtained list of available local services, in order to allow at least one manager device to display generally available services within the communication system with the aid of lists of available local services advertised by the communication devices of said communication system.

2. Method according to Claim 1, **characterized in that**, in the advertisement phase, the communication device in question indicates the list of available local services among the list of the possible local services.

3. Method according to either one of Claims 1 and 2, **characterized in that** the advertisement phase is furthermore carried out on reception of a request from a said manager device.

4. Method according to Claim 3, **characterized in that** said request is associated with information representative of a user profile, and **in that** said communication device refines the list of available local services by removing every local service which is incompatible with said user profile.

5. Method according to any one of Claims 1 to 4, **characterized in that** the advertisement phase comprises the following steps:
- obtaining (302) a list of audio and/or video content containing an identifier of each piece of audio and/or video content which said communication device is able to receive, when said communication device is an audio and/or video content consumer device, and an identifier of each piece of audio and/or video content which said communication device is able to deliver, when said communication device is an audio and/or video content source device;
- obtaining (303) a list of the possible local services with respect to each piece of audio and/or video content; and
- advertising (307) the list of local services, with respect to each piece of audio and/or video content, which are available.

6. Method according to any one of Claims 1 to 4, **characterized in that** each communication device of said communication system carries out the advertisement phase on detection of a change in availability of at least one of its hardware resources, and **in that** each manager device determines generally available services within the communication system on the basis of the lists of available local services as advertised by the communication devices of said communication system.

7. Method according to Claim 6, **characterized in that** each manager device determines each generally available service within the communication system, by selecting an available local service or by combining available local services, according to predefined rules.

8. Method according to either one of Claims 6 and 7, **characterized in that** each manager device refines the list of generally available services within the communication system, by removing every generally available service within the communication system which is incompatible with a user profile.

9. Computer program, **characterized in that** it comprises instructions for implementing, by means of a processor of a communication device, the method according to any one of Claims 1 to 7, when said program is run by said processor.

10. Storage means, **characterized in that** they store a computer program comprising instructions for implementing, by means of a processor of a communication device, the method according to any one of Claims 1 to 5, when said program is run by said processor.

11. Communication device (121; 122) intended to be used in a communication system, said communication device being intended to be connected via a communication network (100) to other communication devices (131; 141) of said communication system,
**characterized in that** the communication device comprises means for carrying out an advertisement phase, on detection of a change in availability of at least one of its hardware resources, the change in availability being linked to the connection of the communication device to the communication network and/or to a change in use of the hardware resources and/or connection/disconnection of a cable, implementing:
- means for obtaining (303) a list of possible local services corresponding to actions which said communication device is able to implement using its hardware resources; the possible local services being services comprising at least one of the following functions:
- processing audio and/or video content,
- making audio and/or video content available for display,
- storing audio and/or video content,
- configuring said communication device,
- updating firmware of said communication device,
- accessing online games,
- accessing websites,
- means for obtaining (304) a list of hardware resources of said communication device which are necessary for offering said local services, the hardware resources being at least one tuner and/or at least one data storage space and/or at least one communication interface and/or an integrated webcam and/or at least one component dedicated to a particular processing operation;
- means for obtaining (306) a list of available local services among the possible local services, based on the hardware resources which are necessary for offering said local services and based on the actual availability of its hardware resources, the communication device taking into account a schedule of reservations of local services of said communication device, so that, when the schedule shows that hardware resources should be occupied for a period of time which starts in a time less than a predefined threshold, said communication device considers that said hardware resources are not available; and
- means for advertising (307), via the communication network, the obtained list of available local services, in order to allow at least one manager device to display generally available services within the communication system with the aid of lists of available local services advertised by the communication devices of said communication system.
